# EUROPÄISCHE PATENTSCHRIFT

(11) **EP 1 774 187 B1**
(45) Veröffentlichungstag und Bekanntmachung des Hinweises auf die Patenterteilung: **24.02.2010**
(21) Anmeldenummer: 05775444.2
(22) Anmeldetag: 04.08.2005
(51) Int. Cl.: F16C 33/62, F16C 33/64, C22C 38/18, F16C 33/32, F16C 33/34

(54) **MASCHINENELEMENT FÜR WÄLZBELASTUNG**
MACHINE ELEMENT FOR ROLLER CHARGE
ORGANE DE MACHINE POUR CHARGE DE ROULEMENT

(30) Priorität: 04.08.2004 US 598892 P
(43) Veröffentlichungstag der Anmeldung: 18.04.2007
(73) Patentinhaber: Schaeffler KG, 91074 Herzogenaurach (DE)
(72) Erfinder: BEER, Oskar, 84032 Landshut (DE); EBERT, Franz-Josef, 97762 Hammelburg (DE); KREISELMEIER, Gerhard, 97456 Dittelbrunn (DE); STREIT, Edgar, 97711 Poppenlauer (DE)
(86) Internationale Anmeldenummer: PCT/DE2005/001397
(87) Internationale Veröffentlichungsnummer: WO 2006/012894

(56) Entgegenhaltungen:
- WO-A-03/081062
- US-A- 3 682 519
- US-A- 5 560 787
- US-A- 5 906 691

## Beschreibung

### Gebiet der Erfindung

Die Erfindung betrifft ein Maschinenelement, das aus einen Stahl mit martensitischem Gefüge gebildet ist und das zumindest in einem lastfreien Zustand unter wenigstens einem Abschnitt der Oberfläche des Maschinenelements Druckeigenspannungen im Gefüge aufweist.

### Hintergrund der Erfindung

Derartige Maschinenelemente sind in US 2004/0071379 A1 beschrieben. Die Maschinenelemente sind insbesondere im Gleit/Wälzkontakt mit einem weiteren Maschinenelement empfindlich gegen Schmutzpartikel zum Beispiel im Schmierstoff eines Lagers. Die unter Wälzbelastung in den Wälzkontakt gelangenden Schmutzpartikel verursachen zunächst Eindrücke und Aufwerfungen in der Oberfläche der Maschinenelemente bzw. des betroffenen Maschinenelementes und führen schließlich zum Ausfall des Systems, zum Beispiel eines Wälzlagers.

Wie auch in US 2004/0071379 A1 beschrieben ist, ist die Empfindlichkeit der Oberflächen derartiger Maschinenelemente von der Art und Größe der an und unterhalb der Oberfläche (in der Randschicht) vorherrschenden Spannungen abhängig. Unter Arten sind in diesem Fall Eigenspannungen (Zug- oder Druckspannungen) in der Randschicht des Maschinenelementes oder durch Fremdeinwirkung auf das Maschinenelement einwirkende Spannungen zu verstehen. Zugspannungen an der Oberfläche und in der Randschicht unterhalb der Oberfläche erhöhen die Ausfall-Empfindlichkeit des Maschinenelementes. Zugspannungen werden durch Betriebsbedingungen hervorgerufen, denen das Maschinenelement ausgesetzt ist. So werden zum Beispiel an einem Innenring eines Wälzlagers an der daran befindlichen Außenlaufbahn und an den Borden die Zugspannungen durch den erforderlichen Presssitz des Innenringes auf einer Welle verstärkt. Wenn dieser Innenring zusätzlich mit hohen Drehzahlen rotiert, können die Zugspannungen ein Niveau erreichen, bei dem die Ausfallempfindlichkeit des Innenringes, z.B. bei Betrieb im Mischreibungsbereich, bei Vorhandensein von Verschmutzung usw., wesentlich erhöht und somit die Gebrauchsdauer und die Zuverlässigkeit des Lagers wesentlich verringert wird.

Denkbar ist auch, dass in dem unbelasteten Maschinenelement zunächst Druckeigenspannungen im äußeren Randbereich vorliegen, die sich dann aber infolge hoher überlagerter Zugspannungen aus Belastungen, wie aus Pressverbänden oder aus Fliehkräften, nachteilig in Zugspannungen wandeln.

Der Fachmann ist deshalb bemüht, in dem unbelasteten Maschinenelement durch mechanische oder durch thermochemische Behandlung Eigenspannungen als Druckspannungen (negativ, d.h. mit dem Vorzeichen (-) gekennzeichnete Spannungen) zu erzeugen. Mechanisch werden derartige Druckspannungen zum Beispiel durch Kugelstrahlen erzeugt. Kugelstrahlen verdichtet das Gefüge an der Oberfläche des Maschinenelementes und erzeugt somit Druckeigenspannungen. Ein derartiges Verfahren ist jedoch nur für das Erzeugen von Druckspannungen in Randschichten mit geringer Tiefe geeignet. Würde man mit einem derartigen mechanischen Verfahren tiefer gehende Randschichten mit Druckeigenspannungen erzeugen wollen, würde man aufgrund der Intensität der Bestrahlung diese Schichten an der Oberfläche vorschädigen bzw. vorermüden und die Überrollfestigkeit und damit die erzielbare Lebensdauer des Maschinenelementes reduzieren.

US 2004/0071379 sieht deshalb ein thermochemisches Verfahren (Nitrieren) vor, bei dem die tieferen Randschichtbereiche zwischen 100 µm und 700 µm unterhalb der Oberfläche Druckeigenspannungen aufweisen, deren Niveau so hoch ist, dass diese sich auch unter Betriebsbedingungen nicht in die nachteiligen Zugspannungen umwandeln können. Nachteilig bei dieser Lösung ist jedoch, dass die Druckeigenspannungen in der Randzone dicht unter der Oberfläche aufgrund unerwünscht hoher Einlagerungen und nachträglicher spanabhebender Bearbeitung jedoch sehr niedrig sind. Es besteht für derartig behandelte Maschinenelemente nach wie vor das Risiko, dass die Druckspannungen bei zusätzlichen Belastungen aus Betriebsbedingungen auf das Maschinenelement, wie durch Zugspannungen aus einem Pressverband und ggf. durch Fliehkräfte von sich nachteilig auswirkenden Zugspannungen überlagert bzw. kompensiert werden.

### Zusammenfassung der Erfindung

Die Aufgabe der Erfindung ist es daher, ein Maschinenelement für Gleit und/oder Wälzbelastungen zu schaffen, mit dem die vorgenannten Nachteile vermieden werden.

Diese Aufgabe ist nach dem Gegenstand des Anspruches 1 dadurch gelöst, dass das Maschinenelement vollständig aus einem Stahl mit einem martensitischen Gefüge gebildet ist und das in einem lastfreien Zustand unter wenigstens einem Abschnitt der Oberfläche des Maschinenelements thermochemisch erzeugte Druckeigenspannungen aufweist. Der Wert der Druckeigenspannungen ist bis zu einer Tiefe von >/= 40 µm mindestens -300 MPa oder kleiner, d.h. zum Beispiel -1000 MPa oder noch weniger, zum Beispiel -1200 MPa. Demnach entspricht der positive Wert der Druckspannung als Absolutbetrag (nach mathematischer Definition des Begriffes Betrag) bei einer Tiefe bis zu 40 µm mindestens 300 MPa und mehr, beispielsweise 1200MPa.

Das Maschinenteil ist lastfrei, wenn es als Bauteil fertig hergestellt, zumindest an dem Abschnitt mit den Druckspannungen unter der Oberfläche, noch keinen Belastungen ausgesetzt ist, die die Art und die Größe der Druckeigenspannungen gemäß Erfindung verändern oder überlagern. Die Belastungen können kinematischer oder mechanischer Natur sein. Derartige Belastungen resultieren zum Beispiel aus dem Einbau des Maschinenteiles in die Umgebungskonstruktion, wie Belastungen aus einem Presssitz. Andere der Belastungen sind die, denen das Bauteil im Betrieb ausgesetzt ist, wie zum Beispiel Fliehkräfte aus Rotation oder Pressungen aus Punkt-, Linien- oder Flächenberührungen im Gleit oder Wälzkontakt mit anderen Maschinenelementen. Weitere Beispiele für derartige Belastungen sind Kerbwirkung, Biegung, Zug und Druck.

Die Druckspannungen sind zumindest in einem Abschnitt unterhalb der Oberfläche des Maschinenelementes ausgebildet, der für eine Gleit und/oder Wälzpaarung mit mindestens einem weiteren Wälzpartner vorgesehen ist. Diese Druckeigenspannungen im Gefüge des Stahles sind erfindungsgemäß nicht mechanisch sondern mittels eines thermochemischen Wärmebehandlungsverfahrens in der Randschicht erzeugt. Die gesamte Oberfläche oder nur ein Abschnitt des erfindungsgemäßen Maschinenelementes sind somit aufgrund der eingestellten Werte auch oberflächennah wenig empfindlich gegenüber hohen Flächenpressungen bzw. gegenüber Kerbwirkungen. Beispiele für Abschnitte an Oberflächen von Maschinenelementen sind die Randzonen der Wälzlaufbahnen an Lagerringe eines Wälzlagers oder die Randzonen an den Lagerringen, die zur Radialführung eines Käfigs vorgesehen sind. Ein anderes Beispiel sind die Flanken von Zahnrädern, die im kämmenden Eingriff Wälz- oder auch teilweise Wälz-Gleitkontakt mit jeweils einer weiteren Zahnflanke stehen. Ein Beispiel für ein Maschinenelement, unter dessen gesamter Oberfläche die erfindungsgemäßen Druckeigenspannungen ausgebildet sind, ist die Kugel als Wälzkörper in einem Wälzlager.

Eine Ausgestaltung der Erfindung sieht vor, dass die Druckeigenspannungen in einer fertig bearbeiteten Randschicht des Maschinenelementes ausgebildet sind. Unter fertig bearbeiteten Randschicht ist zum Beispiel die fertig geschliffene und ggf. gehonte Laufbahn eines Wälzlagers oder eine derartig maschinell bearbeitete Oberfläche eines Wälzkörpers, wie die einer Kugel oder die einer Rolle oder wie die fertig geschliffenen Flanken eines Zahnrades bzw. wie die auf diese oder ähnliche Weise bearbeiteten Laufflächen eines Kugelgewindetriebes, zu verstehen. Die Druckeigenspannungen sind zum Beispiel in einer mit Stickstoff angereicherten Randschicht ausgebildet. Diese Randschicht ist durch Gasnitrieren und vorzugsweise durch Plasmanitrieren erzeugt.

Bei einer weiteren Ausgestaltung der Erfindung wird davon ausgegangen, dass die Randschicht durch so genanntes Doppel- (Duplex-) Härten erzeugt ist, d. h., zunächst wird der Stahl gehärtet und anschließend einer weiteren thermochemischen Wärmebehandlung unterzogen, in der die Randschicht entsteht. Das Verfahren Härten ist das dem Fachmann bekannte übliche Verfahren, bei dem der Stahl austenitisiert, abgeschreckt und angelassen wird. Damit folgt der ersten Wärmebehandlung, die durch bekanntes Härten charakterisiert ist und einen Anlassvorgang einschließt, eine zweite Wärmebehandlung, mit der die erfindungsgemäßen Druckspannungen erzeugt werden. Es ist vorgesehen, dass der Stahl ein Hochtemperaturstahl ist, dessen Gefüge beim ersten Härten eine Anlasstemperatur von wenigstens 400° C zulässt. Die beim anschließenden Randschichthärten angewandte Temperatur liegt demnach über 400° C, für Plasmanitrieren zum Beispiel in einem Bereich von 400° C bis 600° C. Die Anlasstemperatur des Anlassens aus dem ersten Härteverfahren liegt oberhalb der Temperatur, die beim Nitrieren der Randschicht angewandt wird.

Weitere Ausgestaltungen der Erfindungen sehen die Anwendung der Erfindung für Stähle mit den nachfolgend angeführten Bezeichnungen und Mindestzusammensetzungen vor::
a. mit der Bezeichnung M50 (AMS 6491) mit
   - 0,8 bis 0,85 Gewichts- % C
   - 4 bis 4,25 Gewichts- % Cr
   - 4 bis 4,5 Gewichts- % Mo
   - 0,15 bis 0,35 Gewichts- % Mn
   - 0,1 bis 0,25 Gewichts- % Si
   - 0, 9 bis 1,1 Gewichts- % V
   - max. 0, 015 Gewichts- % P
   - max. 0,008 Gewichts- % S
      und mit weiteren legierungsbestimmten Anteilen und mit Eisen sowie mit den üblichen Verunreinigungen.
b. mit der Bezeichnung M50NIL (AMS6278) mit:
   - 0,11 bis 0,15 Gewichts- % C
   - 4,0 bis 4,25 Gewichts- % Cr
   - 4,0 bis 4,5 Gewichts- % Mo
   - 1,1 bis 1,3 Gewichts- % V
   - 3,2 bis 3,6 Gewichts- % Ni.
   - 0,15 bis 0,35 Gewichts- % Mn
   - 0,1 bis 0,25 Gewichts- % Si
   - max. 0,015 Gewichts- % P
   - max. 0,008 Gewichts- % S
      und mit weiteren legierungsbestimmten Anteilen und mit Eisen sowie mit den üblichen Verunreinigungen.
c. mit der Bezeichnung 32CD V13 (AMS6481) mit mindestens:
   - 0,29 bis 0,36 Gewichts- % C
   - 2,8 bis 3,3 Gewichts- % Cr
   - 0,7 bis 1,2 Gewichts- % Mo
   - 0,15 bis 0,35 Gewichts- % V
   - 0,4 bis 0,7 Gewichts- % Mn
   - 0,1 bis 0,4 Gewichts- % Si
   - max. 0,025 Gewichts- % P
   - max. 0,02 Gewichts- % S
      und mit weiteren legierungsbestimmten Anteilen und mit Eisen sowie mit den üblichen Verunreinigungen.
d. mit der Bezeichnung T1 (S 18-0-1) mit:
   - 0,7 bis 0,8 Gewichts- % C
   - 4 bis 5 Gewichts- % Cr
   - 17,5 bis 18,5 Gewichts- % Wo
   - 1 bis 1,5 Gewichts- % V
   - 0 bis 0,4 Gewichts- % Mn
   - 0,15 bis 0,35 Gewichts- % Si
   - max. 0, 025 Gewichts- % P
   - max. 0, 008 Gewichts- % S
      und mit weiteren legierungsbestimmten Anteilen und mit Eisen sowie mit den üblichen Verunreinigungen.
e. mit der Bezeichnung RBD mit:
   - 0,17 bis 0,21 Gewichts- % C
   - 2,75 bis 3,25 Gewichts- % Cr
   - 9,5 bis 10,5 Gewichts- % Wo
      0,2 bis 0,4 Gewichts- % Mn
      0 bis 0,35 Gewichts- % Si
   - 0,35 bis 0,5 Gewichts- % V
   - max. 0, 015 Gewichts- % P
   - max. 0, 015 Gewichts- % S
      und mit weiteren legierungsbestimmten Anteilen und mit Eisen sowie mit den üblichen Verunreinigungen.
f. mit der Bezeichnung Pyrowear 675 (AMS5930) mit:
   - 0,06 bis 0,08 Gewichts- % C
   - 12,8 bis 13,3 Gewichts- % Cr
   - 1,5 bis 2,0 Gewichts- % Mo
   - 0,5 bis 0,7 Gewichts- % V
   - 2,2 bis 2,8 Gewichts- % Ni
   - 4,8 bis 5,8 Gewichts- % Co
   - 0,5 bis 1,0 Gewichts- % Mn
   - 0,2 bis 0,6 Gewichts- % Si
      und mit weiteren legierungsbestimmten Anteilen und mit Eisen sowie mit den üblichen Verunreinigungen.

Die Erfindung betrifft alle Maschinenelemente, die in einer Paarung mit einem weiteren Maschinenelement oder im Kontakt mit mehreren Wälzpartnern einer Gleit und/oder einer Wälzbelastung ausgesetzt sind. Die Wälzbelastung wird durch das aneinander Abwälzen der einzelnen Wälzpartner (Maschinenelemente) zwischen den Wälzpartnern erzeugt. Derartige Maschinenelemente sind beispielsweise Zahnräder im kämmenden Eingriff mit anderen Zahnrädern und die daraus entstehende Wälzbelastung im Wälzkontakt an den Flanken eventuelle Gleitanteile eingeschlossen. Partner einer Wälzpaarung sind alternativ Maschinenelemente von Wälzlagern, wie Innen- und Außenringe sowie Wälzkörper (Kugeln und Rollen). Bei der Anwendung in einem Wälzlager, insbesondere der Anwendung in Lagern für die Luft- und Raumfahrt, ist vorgesehen, dass ein oder mehrere Maschinenelemente des Wälzlagers mit den erfindungsgemäßen Druckspannungen zumindest in den für den Wälzkontakt und/oder Gleitkontakt vorgesehenen Bereichen versehen sind. Partner für Gleitpaarungen sind zum Beispiel Zahnräder bei deren Eingriff auch Kombinationen aus Wälz- und Gleitbewegungen auftreten können und Bauteile von Gleitlagern.

Alternativ dazu können die Paarungen durch Maschinenelemente gebildet sein, die aus von Element zu Element unterschiedlichen Werkstoffen bestehen. So ist es zum Beispiel denkbar, ein erfindungsgemäßes Maschinenelement eines Wälzlagers in Form eines Innenringes mit Wälzkörpern (zum Beispiel Kugeln) aus geeigneten Keramikwerkstoffen, wie Si₃N₄, oder umgekehrt zu paaren.

Es sind auch Paarungen von Maschinenteilen vorgesehen, die aus gleichem Material sind, von denen jedoch mindestens ein Element die erfindungsgemäßen Druckspannungen aus thermochemischer Behandlung und mindestens eines der Elemente diese Druckspannungen nicht aufweist.

Es sind auch Paarungen vorgesehen, in denen wenigstens zwei der miteinander gepaarten Maschinenelemente erfindungsgemäß gestaltet sind und aus zueinander gleichem oder unterschiedlichen Stahlsorten sind. So ist von der Erfindung auch ein Wälzlager betroffen bei dem sowohl wenigstens einer der Lagerringe als auch zumindest einige der Wälzkörper die Druckeigenspannungen aus thermochemischer Behandlung aufweisen. Es ist in diesem Fall möglich, dass die Lagerringe aus einem Stahl anderer oder gleicher Zusammensetzung zu dem der Wälzkörper sind.

### Beschreibung der Zeichnung

Die Erfindung wird nachfolgend anhand eines Ausführungsbeispieles und anhand von hauseigenen Versuchs- und Berechnungsergebnissen näher erläutert. Figur 1 zeigt schematisch und stark vereinfacht ein Wälzlager, mit dem die Erfindung realisiert ist. Figur 2 zeigt in Diagrammform den Bereich in Oberflächennähe, in dem die Druckeigenspannungen gemäß Erfindung ausgebildet sind. Figur 3 zeigt die Darstellung von Mess- und Berechnungsergebnissen in Diagrammform zu Spannungen unter der Oberfläche von einfach-gehärtetem Stahl der Sorte M50 in der Gegenüberstellung zu Duplex- gehärtetem Stahl der Sorte M50. Figur 4 zeigt in Diagrammform den Härteverlauf in Oberflächennähe für ein erfindungsgemäßes Wälzlagerbauteil aus Duplex-gehärtetem Stahl M50. Figur 5 zeigt die Darstellung von Mess- und Berechnungsergebnissen in Diagrammform zu Spannungen unter der Oberfläche von einfach- gehärtetem Stahl der Sorte M50NiL in der Gegenüberstellung zu Duplex-gehärtetem Stahl der Sorte M50NiL. Figur 6 zeigt den Härteverlauf in Oberflächennähe für ein erfindungsgemäßes Wälzlagerbauteil aus Duplex-gehärtetem Stahl M50NiL.

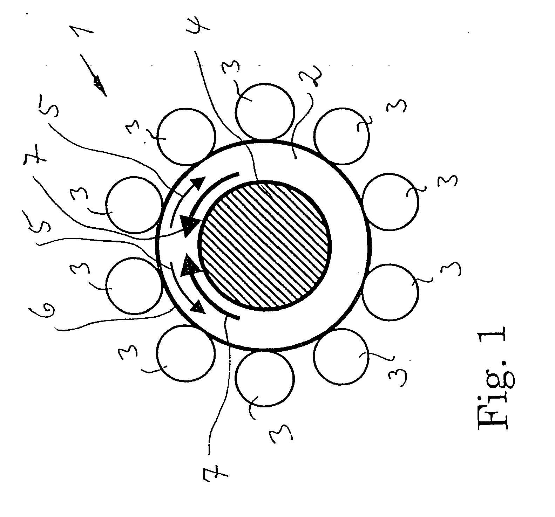

Figur 1, zeigt als Ausführungsbeispiel der Erfindung, ein Wälzlager 1 bei dem das erfindungsgemäße Maschinenelement ein Innenring 2 und/oder ein Wälzkörper 3 in Form einer Kugel ist. Die Kugeln sind wahlweise aus der gleichen Stahlsorte wie der Innenring 2 oder aus einer anderen. Die Kugeln und der Innenring 2 sind die Wälzpartner, von denen Wahlweise einer der Partner oder beide der Partner die erfindungsgemäß thermochemisch erzeugten Druckspannungen aufweist. Der Innenring 2 sitzt mit einem Presssitz auf einer Welle 4. Die Welle 4 rotiert mit hohen Drehzahlen wahlweise in Uhrzeigerrichtung oder entgegengesetzt dazu. Die Kräfte aus dem Presssitz und die Fliehkräfte aus der Rotation erzeugen Zugspannungen 5 (Umfangsspannungen) in der Randschicht 6 des Innenringes 2. Das Gefüge der Randschicht 6 weist am unverbauten Ring Druckeigenspannungen 7 auf, die die Zuspannungen 5 in entgegensetzte Richtung überlagern und diese aufgrund des größeren Wertes und der zu den Zugspannungen entgegengesetzten Wirkrichtung kompensieren.

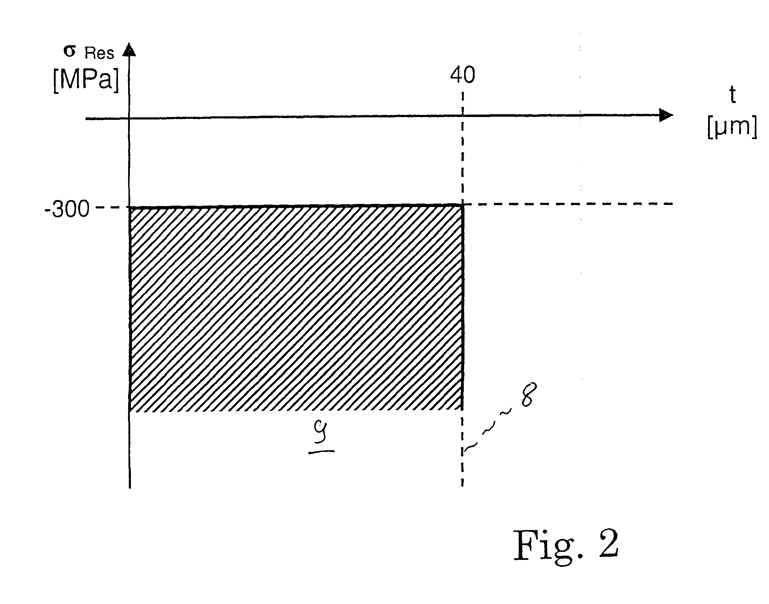

Figur 2 zeigt in Diagrammform die Ergebnisse der Erfindung. Es sind die Druckeigenspannungen σ _{Res} in MPa einer lastfreien Randschicht in Abhängigkeit von der Tiefe t der Randschicht in µm dargestellt. Die Druckeigenspannungen σ _{Res} herrschen zumindest unter einem für Wälzbelastung vorgesehenen Abschnitt der Oberfläche eines Lagerringes oder eines Wälzkörpers vor. Die Abszisse des Diagramms steht für die Randschichttiefe t in Mikrometer. Die Ordinate im Bild unterhalb der Abszisse steht für die mit negativem Vorzeichen versehenen sowie aus Zug und Druck resultierende Druckspannungen (in Megapascal) in der Randschicht. Der weitere Verlauf der Ordinate im Bild oberhalb der Abszisse im Pfeilrichtung steht für die sich nachteilig auswirkenden und mit positivem Vorzeichen versehenen Zugspannungen. Die Linie 8 markiert den Abstand von 40 µm von der Oberfläche aus bis zu dem die Druckeigenspannungen σ _{Res} maximal den Wert von - 300 und weniger aufweisen Der sich aus dem Betrag der Druckeigenspannungen ergebende positive Wert der Druckspannungen ist demnach 300 MPa und mehr, z.B. auch 1000 bis1200 MPa.

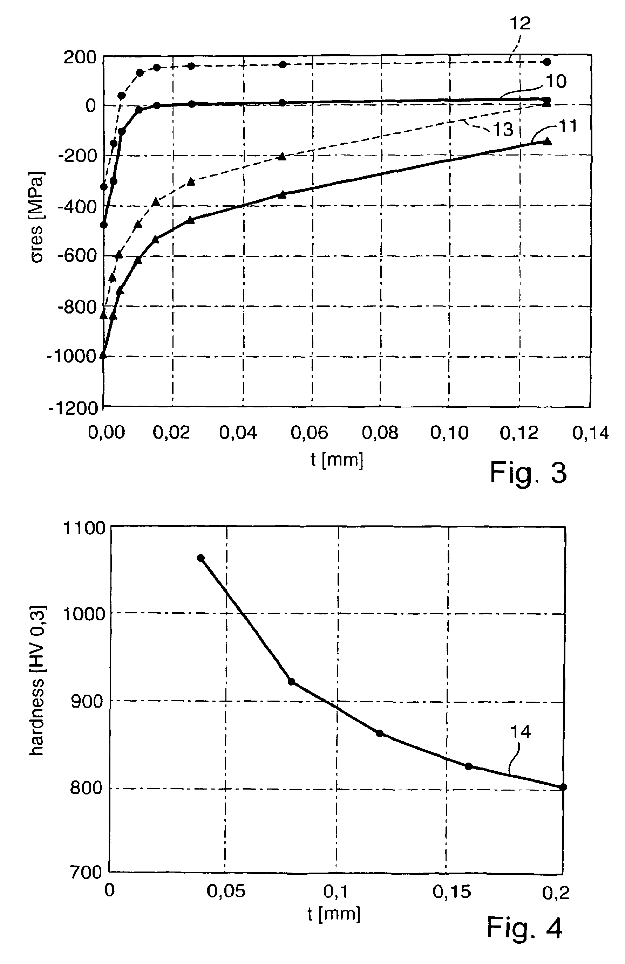

Figur 3 zeigt den Verlauf von Druckeigenspannungen σ _{Res} in MPa in einer Randschicht in Abhängigkeit von dem Abstand t (in µm) von der Oberfläche. Die Abszisse des Diagramms steht auch für die vom Rand ausgehende Schichttiefe t in Mikrometern und die Ordinate für die resultierenden Spannungen in Megapascal in der Schicht. Der Bereich im Bild oberhalb der Spannungen σ _{Res} = 0 steht für die sich nachteilig auswirkenden und mit positivem Vorzeichen versehenen Zugspannungen - der Bereich unterhalb σ _{Res} = 0 steht für die mit negativem Vorzeichen versehenen Druckspannungen.

Es sind zunächst mit den Linien 10 und 11 die Verläufe der Eigenspannungen lastfreier Randschichten für Wälzlagerbauteile aus Stahl der Sorte M50 ohne die erfindungsgemäß veränderte Randschicht und für ein Bauteil aus Stahl der Sorte M50DH gegenübergestellt. Die Verläufe für die lastfreien Zustände sind für beide Stahlsorten mit Volllinien markiert. Die Linie 10 zeigt den Verlauf der Spannungen für den Stahl M50 und die Linie 11 den Verlauf für den Stahl M50 DH. Die Nachsetzzeichen DH stehen für Duplex-Hardening und kennzeichnen ein Bauteil, in dem erfindungsgemäß in Oberflächennähe thermochemisch Druckeigenspannungen erzeugt sind. Es folgt dann die Gegenüberstellung der mit den gestrichelt dargestellten Linien 12 und 13 dargestellten Verläufe der Spannungen der gleichen zuvor erwähnten jedoch hierbei belasteten Randschichten.

Die Randzone des Bauteils aus M50 weist im lastfreien Zustand zunächst bis zu ca. einer Tiefe t von 0,08 - 0,01 mm unter der Oberfläche Druckeigenspannungen auf, die an der Oberfläche den Wert von ca. - 500MPa aufweisen und dann bei 0,08 - 0,01 mm gegen Null gehen. Mit zunehmender Tiefe t ab 0,01 bis zu einer Tiefe t von 0,12mm verläuft die Linie 10 in einem Bereich, in dem, abgesehen von einer eher vernachlässigbaren leichten Tendenz zu Zugspannungen hin, nahezu keine Eigenspannungen positiver oder negativer Natur vorherrschen.

Die Randzone des Bauteils aus M50DH dagegen weist die aus der thermochemischen Behandlung hervorgehenden Druckeigenspannungen gemäß Erfindung auf. Deren Verlauf ist von dem Wert -1000MPa an der Oberfläche bis hin zu ca. -180 MPa bei einer Tiefe t von ca. 0,12 mm unter der Oberfläche mit der Linie 11 dargestellt.

Die Spannungsverläufe für die gleichen aber belasteten Bauteile bzw. Randzonen sind in Figur 3 mit gestrichelten Linien 12 und 13 dargestellt. Belastungen auf die Bauteile sind die, die zumindest in dem betrachteten Randzonenbereich Zugspannungen hervorrufen. Diese Zugspannungen können, wie nachfolgend beschrieben, die Druckeigenspannungen so überlagern, dass die Druckeigenspannungen durch die Betriebszugspannungen verringert oder kompensiert oder von den Zugspannungen in der betragsmäßigen Größe übertroffen werden. Die Belastungen sind nach den in Figur 3 dargestellten Ergebnissen durch eine Verschiebung der Spannungen in Richtung des positiven Spannungsbereiches von 150 MPa über den gesamten Verlauf charakterisiert (Umfangsspannungen von 150 MPa aus Presssitz und Fliehkraft).

Die Randzone des Bauteils aus M50 (Linie 12) weist im belasteten Zustand zunächst an der Oberfläche mit ca. - 320MPa noch Druckeigenspannungen auf, die schon bei 0,003 - 0,005mm Tiefe durch Zugspannungen aufgehoben sind. Ab 0,003 bis 0,005mm Abstand von der Oberfläche und tiefer weist die Randschicht Zugspannungen auf. Mit zunehmender Tiefe t ab 0,01 bis zu einer Tiefe t von 0,12mm ist die Randzone des Bauteils aus M50 durch nahezu konstante Zugspannungen nahe +200 MPa gefährdet.

Die Randzone des Bauteils aus M50DH mit Druckspannungen gemäß Erfindung (Linie 13) weist im belasteten Zustand an der Oberfläche Druckeigenspannungen von ca. -820MPa auf, die jedoch erst bei einer Tiefe von 0,12 mm durch Zugspannungen aufgehoben sind. Die Randschicht kann aufgrund der mit thermochemischer Behandlung erzeugten Druckeigenspannungen hohen Niveaus in relevanter Tiefe nicht von den Zugspannungen aus Belastungen übertroffen werden und ist weniger gefährdet.

Mit der Linie 14 ist in Figur 4 der Verlauf der Härte in der Randschicht eines DH-behandelten Wälzlagerbauteils dargestellt, wie es in Figur 3 beschrieben wurde. Die Randzone des Bauteils aus M50DH mit Druckspannungen gemäß Erfindung (Linie 11 und 13) weist in einer Tiefe von 0,05 mm unter der Oberfläche eine Härte von über 1000 HV0,3 und bei einer Tiefe von 0,2mm immer noch einen Wert von 800 HV0,3 auf.

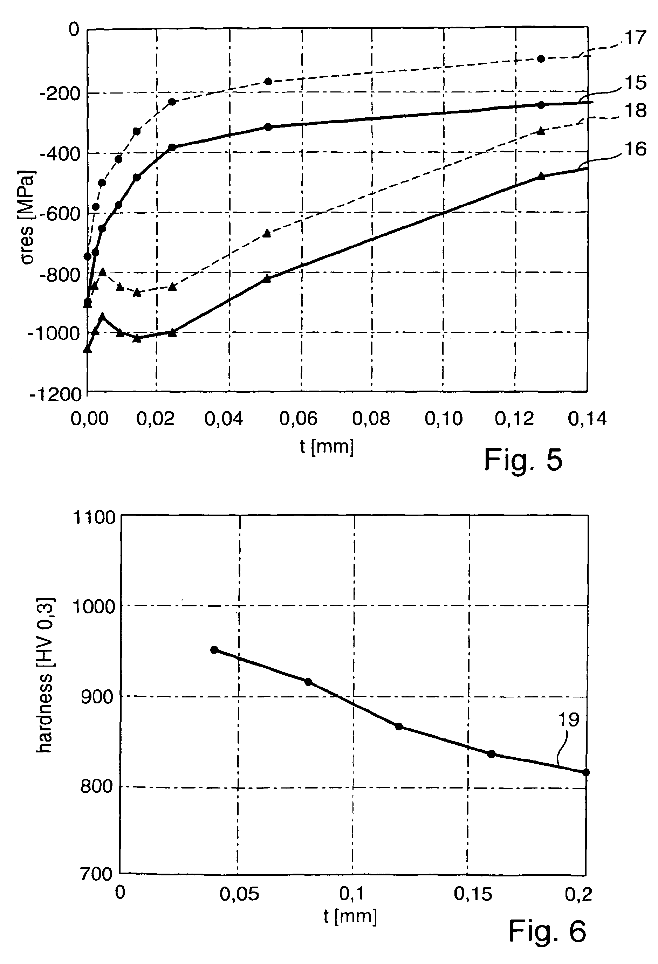

Figur 5 zeigt den Verlauf von Druckeigenspannungen σ _{Res} in MPa in einer Randschicht in Abhängigkeit von dem Abstand t (in µm) von der Oberfläche. Die Abszisse des Diagramms steht auch für die vom Rand ausgehende Schichttiefe t in Mikrometern und die Ordinate für die resultierenden Spannungen in Megapascal in der Schicht. Der Bereich unterhalb Q _{Res} = 0 steht für die mit negativem Vorzeichen versehenen Druckspannungen.

Es sind mit den Linien 15 und 16 die Verläufe der Eigenspannungen lastfreier Randschichten für Wälzlagerbauteile aus Stahl der Sorte M50 NiL, ohne die erfindungsgemäß veränderte Randschicht, und für ein Bauteil aus Stahl der Sorte M50 NiLDH gegenübergestellt. Die Verläufe für die lastfreien Zustände sind für beide Stahlsorten mit Volllinien markiert. Die Linie 15 zeigt den Verlauf der Spannungen für den Stahl M50 NiL und die Linie 16 den Verlauf für den Stahl M50 NiLDH. Die Nachsetzzeichen DH stehen für Duplex-Hardening. Es folgt die Gegenüberstellung der mit den gestrichelt dargestellten Linien 17 und 18 dargestellten Verläufe der Spannungen der gleichen jedoch belasteten Randschichten. Die Linie 17 zeigt den Verlauf der Spannungen für den Stahl M50 NiL und die Linie 18 den Verlauf für den Stahl M50 NiLDH bei belasteter Randschicht.

Figur 5 beschreibt ein Ausführungsbeispiel der Erfindung, mit dem ein Werkstoff mit ohnehin schon relativ guten Spannungsverläufen und Zuständen in der Randschicht mittels der Erfindung noch weiter verbessert werden konnte.

Die Randzone des Bauteils aus M50 NiL weist im lastfreien und im belasteten Zustand unter der Oberfläche Druckeigenspannungen auf. Für das Bauteil aus M50 NiLDH trifft dies ebenso zu. Die Beträge der Druckeigenspannungen des Bauteiles aus M50 NiLDH sind jedoch wesentlich höher - bei einer Tiefe von der Oberfläche aus von 0,02 beträgt die Differenz aus Druckeigenspannung für das Bauteil aus M50 NiLDH (Linie 18) und aus der Druckeigenspannung des Bauteils aus M50 NiL (Linie 17) ca. 550 MPa. Damit ist auch in diesem Fall das Duplex-gehärtete Bauteil belastbarer. Mit zunehmender Tiefe der Randschicht verringert sich diese Differenz und liegt jedoch bei einer Tiefe t von 0,12mm immer noch bei über 200 MPa. Die Belastungen sind, wie auch bei den in Figur 3 dargestellten Ergebnissen, durch eine Verschiebung der Spannungen in Richtung des positiven Spannungsbereiches von 150 MPa über den gesamten Verlauf charakterisiert (Umfangsspannungen von 150 MPa aus Presssitz und Fliehkraft).

Mit der Linie 19 ist in Figur 6 der mögliche Verlauf der Härte in der Randschicht eines erfindungsgemäßen Wälzlagerbauteils dargestellt, wie es beispielsweise in Figur 5 beschrieben wurde. Die Randzone des Bauteils aus M50 NiLDH mit Druckspannungen gemäß Erfindung (Linie 16 und 18) weist in einer Tiefe von 0,05 mm unter der Oberfläche eine Härte von über 900 HV0,3 und bei einer Tiefe von 0,2 mm immer noch einen Wert von über 800 HV0,3 auf.

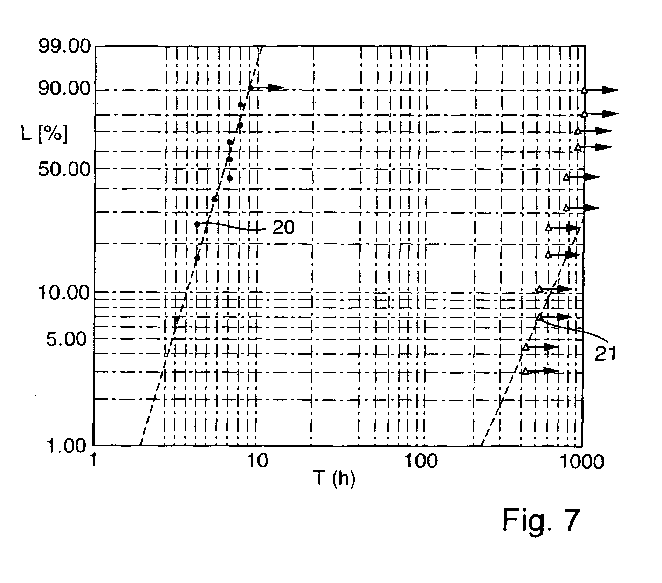

Figur 7 zeigt ein Diagramm, in dem die Ergebnisse 20 zu Lebensdauerversuchen eines im weiteren als Standardlager bezeichneten Lagers aus M50 und mit Wälzkörpern aus Stahl den Ergebnissen 21 eines Hybridlagers mit Duplex-gehärteten Laufringen aus M50DH und mit Wälzkörpern aus Keramik gegenübergestellt sind. Die Messergebnisse 20 der Standardlager sind punktförmig, die Messergebnisse 21 des Hybridlagers in Form von Dreiecken abgebildet. Die von den Messergebnissen 20, 21 ausgehenden horizontal ausgerichteten Pfeile markieren die Prüflinge, die bei der im Diagramm festgehaltenen Laufzeit T immer noch nicht ausgefallen waren.

Der Test wurde unter folgenden Bedingungen durchgeführt: Axiallast 4,1 kN als Belastung bei einer Temperatur von ca. 120°C in aus Gebrauch stark verschmutztem Motorenöl für Dieselmotoren bei p_{0,1R} von 2300 MPa für die Stahlkugeln und bei p_{0,1R} von 2600 MPa für die Kugeln aus Keramik. Es ist ersichtlich, dass bei einer Ausfallwahrscheinlichkeit L von 10% (L₁₀) durch die Prüflinge der Hybridlager gemäß Erfindung das ca. 180-fache und mehr an Laufzeit T in Stunden gegenüber den Prüflingen aus Standardlagern erreicht wurde.

## Patentansprüche

1. Maschinenelement, das vollständig aus einem Stahl mit martensitlschem Gefüge gebildet ist und das zumindest in einem lastfrelen Zustand unter wenigstens einem Abschnitt der Oberfläche des Maschinenelements thermochemisch erzeugte Druckelgenspannungen aufweist, wobei der Wert der Druckelgenspannungen von der Oberfläche aus bis zu einer Tiefe von mindestens 40 µm mindestens dem Absolutbetrag von -300 MPa entspricht.

2. Maschinenelement nach Anspruch 1, das für wenigstens eine Wälzpaarung an dem Abschnitt mit mindestens einem weiteren Maschinenelement vorgesehen ist.

3. Maschinenelement nach Anspruch 1, mit den Druckeigenspannungen in einer Randschicht des fertig bearbeiteten Maschinenelements.

4. Maschinenelement nach Anspruch 1, mit den Druckeigenspannungen in einer mit Stickstoff angereicherten Randschicht.

5. Maschinenelement nach Anspruch 1, mit den Druckspannungen in einer durch Plasmanitrieren veränderten Randschicht.

6. Maschinenelement nach Anspruch 1, mit den Druckspannungen in einer Randschicht, wobei die Randschicht ein zweifach wärmebehandeltes Gefüge aufweist.

7. Maschinenelement nach Anspruch 1, bei dem das Maschinenelement aus einem Stahlwerkstoff ist, dessen Gefüge, nach einer ersten Wärmebehandlung, für eine zweite Wärmebehandlung mit einer Prozesstemperatur von mindestens 400° C geeignet ist.

8. Maschinenelement nach Anspruch 1, aus Stahl mit der Bezeichnung M50 mit
- 0,8 bis 0,85 Gewichts- % Kohlenstoff
- 4 bis 4,25 Gewichts- % Chrom
- 4 bis 4,5 Gewichts- % Molybdän
- 0,9 bis 1,1 Gewichts- % Vanadium
- 0,15 bis 0,35 Gewichts- % Mangan
- 0,1 bis 0,25 Gewichts- % Silizium
- max. 0,015 Gewichts- % Phosphor
- max. 0,008 Gewichts- % Schwefel.

9. Maschinenelement nach Anspruch 1, aus Stahl mit der Bezeichnung M50NIL mit:
- 0,11 bis 0,15 Gewichts- % Kohlenstoff
- 4,0 bis 4,25 Gewichts- % Chrom
- 4,0 bis 4,5 Gewichts- % Molybdän
- 1,1 bis 1,3 Gewichts- % Vanadium
- 3,2 bis 3,6 Gewichts- % Nickel.
- 0,15 bis 0,35 Gewichts-% Mangan
- 0,1 bis 0,25 Gewichts- % Silizium
- max. 0,015 Gewichts- % Phosphor
- max. 0,008 Gewichts- % Schwefel.

10. Maschinenelement nach Anspruch 1, aus Stahl mit der Bezeichnung 32CD V13 mit:
- 0,29 bis 0,36 Gewichts- % Kohlenstoff
- 2,8 bis 3,3 Gewichts- % Chrom
- 0,7 bis 1,2 Gewichts- % Molybdän
- 0,15 bis 0,35 Gewichts- % Vanadium
- 0,4 bis 0,7 Gewichts- % Mangan
- 0,1 bis 0,4 Gewichts- % Silizium
- max. 0,025 Gewichts- % Phosphor
- max. 0,02 Gewichts- % Schwefel.

11. Bauteil nach Anspruch 1, aus Stahl mit der Bezeichnung T1 (S 18-0-1) mit:
- 0,7 bis 0,8 Gewichts- % Kohlenstoff
- 4 bis 5 Gewichts- % Chrom
- 17,5 bis 18,5 Gewichts- % Wolfram
- 1 bis 1,5 Gewichts- % Vanadium
- 0 bis 0,4 Gewichts- % Mangan
- 0,15 bis 0,35 Gewichts- % Silizium
- max. 0, 025 Gewichts- % Phosphor
- max. 0, 008 Gewichts- % Schwefel.

12. Bauteil nach Anspruch 1, aus Stahl mit der Bezeichnung RBD mit:
- 0,17 bis 0,21 Gewichts- % Kohlenstoff
- 2,75 bis 3,25 Gewichts- % Chrom
- 9,5 bis 10,5 Gewichts- % Wolfram
0,2 bis 0,4 Gewichts- % Mangan
0 bis 0,35 Gewichts- % Silizium
- 0.35 bis 0,5 Gewichts- % Vanadium
- max. 0, 015 Gewichts- % Phosphor
- max. 0, 015 Gewichts- % Schwefel.

13. Maschinenelement nach Anspruch 1, aus Stahl mit der Bezeichnung Pyrowear 675 mit:
- 0,06 bis 0,08 Gewichts- % Kohlenstoff
- 12,9 bis 13,3 Gewichts- % Chrom
- 1,5 bis 2,0 Gewichts- % Molybdän
- 0,5 bis 0,7 Gewichts- % Vanadium
- 2,2 bis 2,8 Gewichts- % Nickel
- 4,8 bis 5,8 Gewichts- % Kobalt
- 0,5 bis 1,0 Gewichts- % Mangan
- 0,2 bis 0,6 Gewichts- % Silizium.

14. Maschinenelement nach Anspruch 1, das Bestandteil eines Wälzlagers ist.

15. Maschinenelement nach Anspruch 1, das wenigstens ein Lagerring in der Wälzpaarung mit Wälzkörpern ist.

16. Maschinenelement nach Anspruch 15, das wenigstens ein Wälzkörper in der Wälzpaarung mit wenigstens einem Lagerring ist.

17. Maschinenelement nach Anspruch 1, das ein zumindest ein Bauteil eines Wälzlagers ist und dabei in einer Wälzpaarung mit mindestens einem anderen Bauteil des Wälzlagers steht, wobei wenigstens eines der Bauteile aus einem anderen Material als das andere der Bauteile ist und wenigstens an der Oberfläche eine andere Härte aufweist.

## Claims

1. Machine element which is completely formed from a steel with a martensitic microstructure and which, at least in a load-free state, under at least a portion of the surface of the machine element, has thermochemically produced residual compressive stresses, the magnitude of the residual compressive stresses corresponding to at least an absolute value of -300 MPa from the surface down to a depth of at least 40 µm.

2. Machine element according to Claim 1, which is intended for at least one rolling pairing at the portion with at least one further machine element.

3. Machine element according to Claim 1, having the residual compressive stresses in an outer layer of the fully machined machine element.

4. Machine element according to Claim 1, having the residual compressive stresses in a nitrogen-enriched outer layer.

5. Machine element according to Claim 1, having the compressive stresses in an outer layer which has been modified by plasma nitriding.

6. Machine element according to Claim 1, having the compressive stresses in an outer layer, the outer layer having a microstructure which has been heat-treated twice.

7. Machine element according to Claim 1, which is made from a steel material whose microstructure, after a first heat treatment, is suitable for a second heat treatment with a process temperature of at least 400°C.

8. Machine element according to Claim 1, made from steel having the designation M50, comprising:
- 0.8 to 0.85% by weight of carbon
- 4 to 4.25% by weight of chromium
- 4 to 4.5% by weight of molybdenum
- 0.9 to 1.1% by weight of vanadium
- 0.15 to 0.35% by weight of manganese
- 0.1 to 0.25% by weight of silicon
- max. 0.015% by weight of phosphorus
- max. 0.008% by weight of sulfur.

9. Machine element according to Claim 1, made from steel with the designation M50NiL, comprising:
- 0.11 to 0.15% by weight of carbon
- 4.0 to 4.25% by weight of chromium
- 4.0 to 4.5% by weight of molybdenum
- 1.1 to 1.3% by weight of vanadium
- 3.2 to 3.6% by weight of nickel
- 0.15 to 0.35% by weight of manganese
- 0.1 to 0.25% by weight of silicon
- max. 0.015% by weight of phosphorus
- max. 0.008% by weight of sulfur.

10. Machine element according to Claim 1, made from steel having the designation 32CD V13, comprising:
- 0.29 to 0.36% by weight of carbon
- 2.8 to 3.3% by weight of chromium
- 0.7 to 1.2% by weight of molybdenum
- 0.15 to 0.35% by weight of vanadium
- 0.4 to 0.7% by weight of manganese
- 0.1 to 0.4% by weight of silicon
- max. 0.025% by weight of phosphorus
- max. 0.02% by weight of sulfur.

11. Component according to Claim 1, made from steel having the designation T1 (S 18-0-1), comprising:
- 0.7 to 0.8% by weight of carbon
- 4 to 5% by weight of chromium
- 17.5 to 18.5% by weight of tungsten
- 1 to 1.5% by weight of vanadium
- 0 to 0.4% by weight of manganese
- 0.15 to 0.35% by weight of silicon
- max. 0.025% by weight of phosphorus
- max. 0.008% by weight of sulfur.

12. Component according to Claim 1, made from steel having the designation RBD, comprising:
- 0.17 to 0.21% by weight of carbon
- 2.75 to 3.25% by weight of chromium
- 9.5 to 10.5% by weight of tungsten
- 0.2 to 0.4% by weight of manganese
- 0 to 0.35% by weight of silicon
- 0.35 to 0.5% by weight of vanadium
- max. 0.015% by weight of phosphorus
- max. 0.015% by weight of sulfur.

13. Machine element according to Claim 1, made from steel having the designation Pyrowear 675, comprising:
- 0.06 to 0.08% by weight of carbon
- 12.8 to 13.3% by weight of chromium
- 1.5 to 2.0% by weight of molybdenum
- 0.5 to 0.7% by weight of vanadium
- 2.2 to 2.8% by weight of nickel
- 4.8 to 5.8% by weight of cobalt
- 0.5 to 1.0% by weight of manganese
- 0.2 to 0.6% by weight of silicon.

14. Machine element according to Claim 1, which is part of a roller bearing.

15. Machine element according to Claim 1, which is at least one bearing ring in the rolling pairing with rolling bodies.

16. Machine element according to Claim 15, which is at least one rolling body in the rolling pairing with at least one bearing ring.

17. Machine element according to Claim 1, which is at least one component of a roller bearing and is in a rolling pairing with at least one other component of the roller bearing, at least one of the components being made from a different material than the other of the components and having a different hardness at least at the surface.

## Revendications

1. Elément de machine formé complètement d'un acier à réseau martensitique et qui, au moins dans des conditions sans charge, présente en dessous d'au moins une partie de la surface de l'élément de machine des contraintes propres de compression formées thermochimiquement, la valeur des contraintes propres de compression, partant de la surface jusqu'à une profondeur d'au moins 40 µm, correspondant au moins à une valeur absolue de -300 MPa.

2. Elément de machine selon la revendication 1, prévu pour au moins une paire de cylindres sur la partie qui présente au moins un autre élément de machine.

3. Elément de machine selon la revendication 1, dans lequel les contraintes propres de compression sont situées dans une couche de bord de l'élément de machine usiné prêt à l'emploi.

4. Elément de machine selon la revendication 1, dans lequel les contraintes propres de compression sont présentes dans une couche de bordure enrichie en azote.

5. Elément de machine selon la revendication 1, dans lequel les contraintes de compression sont présentes dans une couche de bordure modifiée par nitruration au plasma.

6. Elément de machine selon la revendication 1, dans lequel les contraintes de compression sont présentes dans une couche de bordure, la couche de bordure présentant un réseau traité thermiquement deux fois.

7. Elément de machine selon la revendication 1, dans lequel l'élément de machine est un matériau à base d'acier dont le réseau, après un premier traitement thermique, convient pour un deuxième traitement thermique à une température de traitement d'au moins 400°C.

8. Elément de machine selon la revendication 1, en acier désigné par M50, qui continent :
- de 0,8 à 0,85 % en poids de carbone,
- de 4 à 4,25 % en poids de chrome,
- de 4 à 4,5 % en poids de molybdène,
- de 0,9 à 1,1 % en poids de vanadium,
- de 0,15 à 0,35 % en poids de manganèse,
- de 0,1 à 0,25 % en poids de silicium,
- au plus 0,015 % en poids de phosphore,
- au plus 0,008 % en poids de soufre.

9. Elément de machine selon la revendication 1, en acier désigné par M50NiL, qui continent :
- de 0,11 à 0,15 % en poids de carbone,
- de 4,0 à 4,25 % en poids de chrome,
- de 4,0 à 4,5 % en poids de molybdène,
- de 1,1 à 1,3 % en poids de vanadium,
- de 3,2 à 3,6 % en poids de nickel,
- de 0,15 à 0,35 % en poids de manganèse,
- de 0,1 à 0,25 % en poids de silicium
- au plus 0,015 % en poids de phosphore,
- au plus 0,008 % en poids de soufre.

10. Elément de machine selon la revendication 1, en acier portant la désignation 32CD V13, qui contient :
- de 0,29 à 0,36 % en poids de carbone,
- de 2,8 à 3,3 % en poids de chrome,
- de 0,7 à 1,2 % en poids de molybdène,
- de 0,15 à 0,35 % en poids de vanadium,
- de 0,4 à 0,7 % en poids de manganèse,
- de 0,1 à 0,4 % en poids de silicium,
- au plus 0,025 % en poids de phosphore,
- au plus 0,02 % en poids de soufre.

11. Composant selon la revendication 1, en acier portant la désignation T1 (S 18-0-1), qui contient :
- de 0,7 à 0,8 % en poids de carbone,
- de 4 à 5 % en poids de chrome,
- de 17,5 à 18,5 % en poids de tungstène,
- de 1 à 1,5 % en poids de vanadium,
- de 0 à 0,4 % en poids de manganèse,
- de 0,15 à 0,35 % en poids de silicium,
- au plus 0,025 % en poids de phosphore,
- au plus 0,008 % en poids de soufre.

12. Composant selon la revendication 1, en acier portant la désignation RBD, qui contient :
- de 0,17 à 0,21 % en poids de carbone,
- de 2,75 à 3,25 % en poids de chrome,
- de 9,5 à 10,5 % en poids de tungstène,
- de 0,2 à 0,4 % en poids de manganèse,
- de 0 à 0,35 % en poids de silicium,
- de 0,35 à 0,5 % en poids de vanadium,
- au plus 0,015 % en poids de phosphore,
- au plus 0,015 % en poids de soufre.

13. Elément de machine selon la revendication 1, en acier portant la désignation Pyrowear 675, qui contient :
- de 0,06 à 0,08 % en poids de carbone,
- de 12,8 à 13,3 % en poids de chrome,
- de 1,5 à 2,0 % en poids de molybdène,
- de 0,5 à 0,7 % en poids de vanadium,
- de 2,2 à 2,8 % en poids de nickel,
- de 4,8 à 5,8 % en poids de cobalt,
- de 0,5 à 1,0 % en poids de manganèse,
- de 0,2 à 0,6 % en poids de silicium.

14. Elément de machine selon la revendication 1, qui fait partie d'un palier de cylindre.

15. Elément de machine selon la revendication 1, qui est au moins une bague de palier de la paire de cylindres avec corps de cylindre.

16. Elément de machine selon la revendication 15, qui est au moins un corps de cylindre de la paire de cylindres comportant au moins une bague de palier.

17. Elément de machine selon la revendication 1, qui est au moins un composant d'un palier de cylindre et qui assure l'appariement de cylindres avec au moins un autre composant du palier de cylindre, au moins l'un des composants étant constitué d'un autre matériau que l'autre composant et présentant une autre dureté à sa surface.
